Europäisches Patentamt

European Patent Office

Office européen des brevets

(19)

(11) Numéro de publication: **0 376 789**

**A1**

(12) **DEMANDE DE BREVET EUROPEEN**

(21) Numéro de dépôt: **89403499.0**

(22) Date de dépôt: **15.12.89**

(51) Int. Cl.⁵: **C01F 17/00, B01J 23/10**

(30) Priorité: **23.12.88 FR 8817068**

(43) Date de publication de la demande:
**04.07.90 Bulletin 90/27**

(84) Etats contractants désignés:
**AT BE CH DE ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Le Loarer, Jean-Luc**
**24, rue du Général Guillaumat**
**F-17000 La Rochelle(FR)**
Inventeur: **Picard, Françoise**
**50, avenue de la Dame Blanche**
**F-94120 Fontenay/Sous/Bois(FR)**
Inventeur: **David, Claire**
**14bis rue Friant**
**F-75014 Paris(FR)**

(74) Mandataire: **Esson, Jean-Pierre et al**
**RHONE-POULENC CHIMIE Service Brevets**
**Chimie 25, quai Paul Doumer**
**F-92408 Courbevoie Cedex(FR)**

(54) **Procédé d'obtention d'un oxyde cerique a grande surface specifique.**

(57) La présente invention est relative à un procédé d'obtention d'un oxyde cérique à grande surface spécifique.
Le procédé de l'invention est caractérisé par le fait que l'on soumet une dispersion colloïdale d'un composé de cérium IV à un traitement solvothermal, à séparer le précipité formé et à le calciner.
L'oxyde cérique obtenu présente une grande surface spécifique à haute température.

EP 0 376 789 A1

## PROCEDE D'OBTENTION D'UN OXYDE CERIQUE A GRANDE SURFACE SPECIFIQUE

La présente invention a trait à un nouveau procédé d'obtention d'un oxyde cérique à grande surface spécifique à température élévée.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER - EMMETT - TELLER décrite dans le périodique "The Journal of American Society, 60, 309 (1938)".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t. 297 - Série II-471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 m²/g.

Par ailleurs, on a décrit dans FR-A 2 559 754 un oxyde cérique présentant une surface spécifique d'au moins 85 ± 5 m²/g obtenue après calcination entre 350 et 450°C et, de préférence, située entre 100 et 130 m²/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est préparé dans une gamme de température de calcination allant de 300 à 600°C. Toutefois, on note une chute de la surface spécifique après calcination à une température plus haute, la surface spécifique étant de 10 m²/g, après calcination à 800°C.

On peut également citer FR-A 2 559 755 qui concerne un oxyde cérique présentant une surface spécifique d'au moins 85 ± 5 m²/g après calcination entre 350 et 500°C et, de préférence, située entre 150 et 180 m²/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique, mais lorsqu'il est soumis à une opération de calcination à 800°C, sa surface spécifique décroit considérablement et se situe vers 10 m²/g.

Dans la demande de brevet européen n° 88 401593.4, la demanderesse a décrit un procédé pour accroître et stabiliser à haute température, la surface spécifique d'un oxyde cérique.

Ce procédé consiste à soumettre l'hydroxyde cérique, précurseur d'oxyde cérique, à un traitement solvothermal avant l'opération de calcination.

Plus particulièrement, le procédé décrit dans ladite demande consiste :
- à mettre l'hydroxyde cérique en suspension dans un milieu liquide,
- à le chauffer dans une enceinte close jusqu'à une température et une pression inférieures respectivement à la température critique et à la pression critique dudit milieu,
- à refroidir le milieu réactionnel et à le ramener à la pression atmosphérique,
- à séparer l'hydroxyde cérique ainsi traité,
- puis à le calciner.

On entend par hydroxyde cérique, un oxyde cérique hydraté $CeO_2,2H_2O$ ou bien un hydroxyde cérique pouvant contenir des quantités résiduelles d'anions liés ou adsorbés tels que, par exemple, chlorures, sulfates, nitrates, acétates, formiates, etc...

Un mode de réalisation préférentiel du procédé décrit dans la demande de brevet européen n° 88 401593.4 consiste à faire appel à une solution de base, comme milieu liquide d'autoclavage.

Un tel procédé permet non seulement d'accroître la surface spécifique de l'oxyde cérique obtenu, mais également de conserver une surface spécifique élevée jusqu'à des températures de 900°C.

En soumettant un hydroxyde cérique préparé en faisant réagir une solution de sel de cérium et une base éventuellement en présence d'un agent oxydant, dans des conditions de pH supérieur à 7, à un traitement d'autoclavage en milieu basique, la demanderesse propose selon la demande de brevet européen n° 88 401594.2, un oxyde cérique présentant une surface spécifique à 800-900°C jamais atteinte par les produits décrits dans l'état de la technique.

L'oxyde cérique ainsi obtenu présente une surface spécifique d'au moins 15 m²/g mesurée après calcination à une température comprise entre 800 et 900°C et, de préférence, comprise entre 20 et 60 m²/g mesurée après calcination à une température de 800°C.

Il présente une surface spécifique comprise entre 160 et 15 m²/g mesurée après calcination à une température comprise entre 350 et 900°C.

C'est ainsi qu'il peut présenter une surface spécifique variant entre 70 et 160 m²/g et, de préférence, entre 100 à 160 m²/g mesurée après calcination entre 350 et 450°C.

Toutefois, lorqu'il sera soumis à une température plus élevée pouvant atteindre 900°C, au moment de son utilisation, notamment dans le domaine de la catalyse, il présente la caractéristique de conserver une surface spécifique d'au moins 15 m²/g et, de préférence, comprise entre 20 et 60 m²/g lorsqu'il est soumis à une température de 800°C.

Dans la présente demande, les surfaces spécifiques exprimées sont mesurées sur un produit ayant subi une calcination d'au moins 2 heures à la température donnée.

Une autre caractéristique de l'oxyde cérique, objet de la demande de brevet européen n° 88 401594.2, est qu'il présente un volume poreux supérieur à 0,1 cm³/g à une température de mesure comprise entre 800 et 900°C et, de préférence, supérieur à 0,15 cm³/g.

Le volume poreux correspondant aux pores de diamètre inférieur à 60 nm (600 Å) est mesuré au porosimètre à mercure selon la norme ASTM D4284-83 ou suivant la méthode des isothermes d'adsorption d'azote, méthode B.E.T. précitée.

Comme la surface spécifique, le volume poreux dépend de la température de calcination : il peut varier entre 0,35 et 0,15 cm³/g pour une température de calcination allant de 350 à 900°C.

L'oxyde cérique préféré, objet de la demande de brevet européen n° 88 401594.2 présente un volume poreux compris entre 0,15 et 0,25 cm³/g après calcination à une température de 800°C.

La taille des pores d'un oxyde cérique calciné à 800°C s'échelonne entre 3 nm (30 Å) et 60 nm (600 Å) : le diamètre moyen ($d_{50}$) des pores varie entre 20 nm (200 Å) et 30 nm (300 Å), de préférence, aux environs de 25 nm (250 Å).

On définit le diamètre moyen comme étant un diamètre tel que tous les pores inférieurs à ce diamètre constituent 50 % du volume poreux (Vp) total des pores de diamètre inférieur à 60 nm (600 Å).

Un oxyde cérique calciné à 350°C présente des pores de 2 nm (20 Å) à 100 nm (1000 Å) : le diamètre moyen variant de 10 nm (100 Å) à 20 nm (200 Å) et, de préférence, voisin de 15 nm (150 Å).

L'analyse par diffraction X montre que l'oxyde cérique, objet de la demande de brevet européen n° 88 401594.2 présente une phase cristalline de type $CeO_2$ ayant un paramètre de maille variant de 0,542 nm (5,42 Å) à 0,544 nm (5,44 Å). A titre indicatif, on précisera que la taille des cristallites d'un oxyde cérique obtenu après calcination à 350°C se situe entre 4 nm (40 Å) et 6 nm (60 Å) et après calcination à 800°C, entre 10 nm (100 Å) et 20 nm (200 Å).

Il a maintenant été trouvé qu'un oxyde cérique présentant de telles caractéristiques morphologiques pouvait être obtenu selon un autre procédé d'obtention en partant non pas d'un hydroxyde cérique, mais d'une dispersion colloïdale d'un hydroxyde cérique obtenue directement à partir d'un sel de cérium IV.

La présente invention a donc précisément pour objet un procédé d'obtention d'un oxyde cérique présentant une surface spécifique d'au moins 15 m²/g mesurée après calcination à une température comprise entre 800°C et 900°C caractérisé par le fait qu'il consiste :

- à introduire dans une enceinte close, une dispersion colloïdale d'un composé de cérium IV obtenue en faisant réagir une solution aqueuse d'un sel de cérium IV et une base de façon à obtenir un taux de neutralisation supérieur à 0 et inférieur à 4,0 ,

- à chauffer ledit milieu jusqu'à une température et une pression inférieures respectivement à la température critique et à la pression critique de celui-ci,

- à refroidir le milieu réactionnel et à le ramener à la pression atmosphérique,

- à séparer le précipité formé,

- puis à le calciner.

Conformément au procédé de l'invention, on fait appel à une dispersion colloïdale d'un composé de cérium IV. Celle-ci fait l'objet des demandes de brevet EP-A 0 206 906 et EP-A 0 208 580 qui sont incorporées par référence dans la présente description.

Par dispersion colloïdale d'un composé de cérium IV, on entend une dispersion colloïdale d'un hydroxyde cérique ou oxyde cérique hydraté $CeO_2,2H_2O$ pouvant contenir des quantités résiduelles d'ions liés ou absorbés tels que par exemple, nitrate, ammonium.

On réalise la préparation de ladite dispersion colloïdale en faisant réagir une solution aqueuse de sel de cérium IV avec une base dans les conditions définies ci-après.

On met en oeuvre une quantité de base inférieure à la quantité de base nécessaire à la neutralisation complète du cérium IV présent dans le milieu réactionnel pour obtenir $Ce(OH)_4$.

Il en résulte que l'on obtient le cérium IV non pas sous forme d'un précipité gélatineux, mais sous forme de colloïdes, ce qui signifie qu'il y a présence de particules de dimensions colloïdales.

Selon les conditions de préparation de ladite dispersion, le cérium IV peut se trouver totalement sous la forme de colloïdes. Il est également possible que le cérium IV se trouve simultanément sous forme d'ions et sous forme de colloïdes. Pour simplifier l'exposé, on entend par "dispersion colloïdale" aussi bien une dispersion colloïdale qu'un mélange ions-colloïdes : ceux-ci seront mieux explicités ultérieurement.

A titre de solutions de sel de cérium IV, on peut faire appel notamment à une solution aqueuse de nitrate cérique ou une solution aqueuse de nitrate céri-ammoniacal. Ladite solution peut contenir sans inconvénient du cérium à l'état céreux mais il est souhaitable qu'elle contienne au moins 85 % de cérium IV.

La concentration de la solution de sel de cérium n'est pas un facteur critique, selon l'invention. Lorsqu'elle est exprimée en cérium IV, elle peut varier entre 0,1 et 2 moles par litre : une concentration comprise entre 0,1 et 1 mole par litre est préférée.

La solution aqueuse du sel de cérium IV présente généralement une certaine acidité initiale et peut avoir une normalité variant entre 0,1 N et 4 N. La concentration en ions $H^+$ n'est pas critique. Il est souhaitable qu'elle se situe entre 0,1 N et 1 N.

La solution de nitrate cérique obtenue selon le procédé d'oxydation électrolytique d'une solution de nitrate céreux et qui est décrite dans la demande de brevet française FR-A 2 570 087 (n° 84 13641) constitue une matière première de choix.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais, de préférence, entre 0,1 à 5 N.

La proportion entre la solution basique et la solution de sel de cérium IV doit être telle que le taux de neutralisation est supérieur à 0 et inférieur à 4,0. Il est compris de préférence entre 0,1 et 3,8, et encore plus préférentiellement entre 0,5 et 3,0.

On définit le taux de neutralisation r par l'équation suivante :

$$r = \frac{n3 - n2}{n1}$$

dans laquelle :
- n1 représente le nombre de moles de Ce IV présentes dans la dispersion colloïdale finale
- n2 représente le nombre de moles $OH^-$ nécessaires pour neutraliser l'acidité apportée par la solution aqueuse de sel de cérium IV
- n3 représente le nombre total de moles $OH^-$ apportées par l'addition de la base.

Le taux de neutralisation reflète l'état colloïdal du cérium IV :
- avec r = 4, le cérium IV précipite sous forme gélatineuse
- avec r = 0, le cérium IV est sous forme ionique
- avec 0 < r 4, le cérium IV est sous forme ionique et/ou colloïdale.

Lorsque le taux de neutralisation est élevé, c'est-à-dire supérieur à 3,0, le cérium IV dans la dispersion colloïdale obtenue est essentiellement sous la forme de colloïdes. Pour des taux de neutralisation compris entre 3,4 et 3,8, le taux de cérium IV sous forme colloïdale est de 100 %.

Dans le cas de taux de neutralisation élevé, les colloïdes présentent une composition chimique correspondant à la formule (I) :

$Ce(OH)_{4-x} (NO_3)_x$      (I)

dans laquelle x varie entre 0,3 et 0,7.

Il est à noter que la force ionique est importante du fait de la présence d'une forte concentration du sel de la base qui se situe entre 0,3 et 8 moles/litre.

4

Lorsque le taux de neutralisation est inférieur ou égal à 3,0, le taux de cérium IV sous forme colloïdale est compris entre 10 et 90 du cérium IV mis en oeuvre.

La réaction entre la solution aqueuse du sel de cérium IV et la base mises en oeuvre dans les quantités définies précédemment est effectuée à une température qui peut se situer entre 0°C et 60°C mais de préférence à la température ambiante (le plus souvent 15 à 25°C).

On peut réaliser le mélange des réactifs précités selon plusieurs variantes. Par exemple, on peut faire le mélange simultané, sous agitation, de la solution aqueuse du sel de cérium IV et de la solution basique ou bien additionner, en continu ou en une seule fois, la base dans la solution aqueuse du sel de cérium IV ou inversement.

La durée du mélange n'est pas critique et dépend des capacités de l'appareillage. Elle peut varier entre 0,1 seconde et 30 heures.

Quelque soit l'ordre d'introduction des réactifs, on obtient une dispersion colloïdale d'un composé de cérium IV, en milieu aqueux qui peut alors être mise en oeuvre dans le procédé de l'invention.

La concentration de la dispersion colloïdale d'un composé de cérium IV exprimée en $CeO_2$ peut varier entre 0,1 et 2,0 moles/litre, de préférence, entre 0,1 et 1,0 mole/litre.

Le diamètre hydrodynamique moyen des colloïdes varie entre 4 nm (40 Å) et 40 nm (400 Å) environ. Il est déterminé par diffusion quasi-élastique de la lumière selon la méthode décrite par Michael L. McCONNELL dans Analytical Chemistry, 53 n° 8, 1007A (1981).

Conformément au procédé d'obtention d'un oxyde cérique à grande surface spécifique selon l'invention, on soumet ladite dispersion, à une opération d'autoclavage.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C.

La montée en température s'effectue à une vitesse qui n'est pas critique. On atteint la température réactionnelle en chauffant par exemple entre 30 minutes et 4 heures.

On peut conduire le procédé de l'invention, en introduisant la dispersion colloïdale d'hydroxyde cérique dans une enceinte close, la pression ne résulte donc que du chauffage du mélange réactionnel.

Dans les conditions de températures données ci-dessus, et en milieu aqueux, on peut préciser, à titre illustratif, que la pression varie entre 1($10^5$ Pa) et 165 Bars (165.$10^5$ Pa) de préférence entre 5(5.$10^5$ Pa) et 165 Bars (165.$10^5$ Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphérique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage de préférence à l'eau et/ou à un séchage. Le séchage peut être effectué à l'air ou sous pression réduite, par exemple de l'ordre de 1 à 100 mm de mercure (133,322 Pa à 13332,2 Pa). La température de séchage peut varier entre la température ambiante et 100°C et la durée de séchage n'est pas critique et peut être comprise entre 2 et 48 heures.

Selon une dernière étape du procédé de l'invention, on calcine le produit obtenu à une température comprise entre 300°C et 1000°C et, de préférence, choisie entre 350°C et 800°C.

La durée de la calcination peut varier dans de larges limites entre 30 minutes et 10 heures, et, de préférence entre 2 et 6 heures.

On confirme, selon l'invention, que l'opération d'autoclavage appliquée à une dispersion colloïdale d'hydroxyde cérique telle que définie, permet d'obtenir un oxyde cérique présentant une surface spécifique élevée d'au moins 15 m²/g mesurée après calcination à une température comprise entre 800°C et 900°C. La surface spécifique de l'oxyde cérique obtenu varie, généralement, entre 20 et 60 m²/g et, plus particulièrement, entre 20 et 35 m²/g, mesurée après calcination à une température de 800°C.

Les exemples qui suivent illustrent l'invention sans toutefois la limiter.

Exemples 1 à 3

1. Préparation de la dispersion colloïdale d'hydroxyde cérique

Dans cette série d'essais, on met en oeuvre une dispersion colloïdale d'hydroxyde cérique présentant les taux de neutralisation suivants : r = 0,5 (exemple 1), r = 1,5 (exemple 2), r = 3,0 (exemple 3).

On part d'une solution aqueuse de nitrate cérique contenant 1,25 moles/litre de cérium IV, 0,02 mole/litre de cérium III et une acidité libre de 0,35 N préparée par électrolyse conformément à FR-A 2 570 087.

On additionne une solution aqueuse d'ammoniaque 3N, à raison de 0,5 mole d'OH$^-$ par mole de $CeO_2$ et par heure : la quantité de base ajoutée étant calculée de telle sorte que l'on obtienne le taux de neutralisation désiré.

Dans tous les exemples, la dispersion colloïdale d'hydroxyde cérique obtenue est plus exactement une dispersion colloïdale d'un hydroxynitrate cérique ayant un rapport molaire [CeIV]/[NO$_3^-$] = 0,5 et présente une concentration exprimée en $CeO_2$ égale à 60 g/l.

Le pourcentage de cérium sous forme colloïdale est d'environ 15 % dans l'exemple 1, 40 dans l'exemple 2, et 90 % dans l'exemple 3 : il est déterminé en dosant le cérium IV dans la solution surnageante obtenue après ultracentrifugation (140 000 g - 2 heures) par titrage potentiométrique à l'aide d'une solution titrée de fer II.

Le diamètre hydrodynamique moyen des colloïdes mesuré par diffusion quasi-élastique de la lumière est de 5 nm.

## 2. Traitement d'autoclavage

Dans un réacteur BUCHI en verre équipé d'un dispositif d'agitation tournant à 80 tours/minute, on introduit 500 cm$^3$ de la dispersion colloïdale préparée sous 1.

On soumet le milieu réactionnel à un traitement d'autoclavage à une température de 180°C, soit environ 12 bars, pendant 4 heures.

A la fin de ce traitement thermique, on filtre le précipité sur Büchner.

On le soumet ensuite à une opération de calcination d'une durée de 6 heures à différentes températures : 350°C, 600°C, 800°C. Les résultats sont consignés dans le tableau I suivant :

Tableau I

| Référence exemple | Taux de neutralisation | Surface spécifique m$^2$/g | | |
|---|---|---|---|---|
| | | Température de calcination 350°C | Température de calcination 600°C | Température de calcination 800°C |
| 1 | r = 0,5 | 90 | 70 | 20 |
| 2 | r = 1,5 | 96 | 72 | 25 |
| 3 | r = 3,0 | 80 | 59 | 22 |

On note que les surfaces spécifiques obtenues à 800°C sont élevées.

## Revendications

1. Procédé d'obtention d'un oxyde cérique présentant une surface spécifique d'au moins 15 m$^2$/g mesurée après calcination à une température comprise entre 800°C et 900°C caractérisé par le fait qu'il consiste :
- à introduire dans une enceinte close, une dispersion colloïdale d'un composé de cérium IV obtenue en faisant réagir une solution aqueuse d'un sel de cérium IV et une base de façon à obtenir un taux de neutralisation supérieur à 0 et inférieur à 4,0,
- à chauffer ledit milieu jusqu'à une température et une pression inférieures respectivement à la température critique et à la pression critique de celui-ci,
- à refroidir le milieu réactionnel et à le ramener à la pression atmosphérique,
- à séparer le précipité formé,

6

- puis à le calciner.

2. Procédé selon la revendication 1 caractérisé par le fait que la dispersion colloïdale d'un composé de cérium IV est préparée par réaction d'une solution aqueuse de nitrate cérique ou de nitrate céri-ammoniacal et d'une base.

3. Procédé selon la revendication 2 caractérisé par le fait que la solution aqueuse de sel de cérium IV est une solution provenant de l'oxydation électrochimique d'une solution de nitrate céreux.

4. Procédé selon l'une des revendications 2 et 3 caractérisé par le fait que la concentration en sel de cérium IV exprimée en cérium IV varie entre 0,1 et 2 moles/litre.

5. Procédé selon l'une des revendications 1 à 2 caractérisé par le fait que la solution basique est une solution aqueuse d'ammoniaque.

6. Procédé selon la revendication 5 caractérisé par le fait que la normalité de la solution basique est comprise entre 0,1 et 5 N.

7. Procédé selon la revendication 1 caractérisé par le fait que l'on fait réagir une solution aqueuse de sel de cérium IV avec une base de façon à obtenir un taux de neutralisation compris entre 0,1 et 3,8.

8. Procédé selon la revendication 7 caractérisé par le fait que l'on choisit un taux de neutralisation compris entre 0,5 et 3,0.

9. Procédé selon la revendication 1 caractérisé par le fait que la température de réaction entre la solution aqueuse de sel de cérium IV et la base est la température ambiante.

10. Procédé selon l'une des revendications 1 à 9 caractérisé par le fait que l'on mélange simultanément la solution aqueuse du sel de cérium IV et la solution basique ou que l'on additionne la base dans la solution de cérium IV ou inversement.

11. Procédé selon l'une des revendications 1 à 10 caractérisé par le fait que la concentration de la dispersion colloïdale du composé de cérium IV exprimé en $CeO_2$ varie entre 0,1 et 2,0 moles/litre.

12. Procédé selon la revendication 11 caractérisé par le fait que ladite concentration est comprise entre 0,1 et 1,0 mole/litre.

13. Procédé selon l'une des revendications 1 à 12 caractérisé par le fait que la température d'autoclavage varie entre 100 et 350 °C.

14. Procédé selon la revendication 13 caractérisé par le fait que ladite température est comprise entre 150 et 350 °C.

15. Procédé selon l'une des revendications 1 à 14 caractérisé par le fait que la pression varie entre 1 ($10^5$- Pa) et 165 bars ($165.10^5$ Pa).

16. Procédé selon la revendication 15 caractérisé par le fait que ladite pression est comprise entre 5 ($5.10^5$- Pa) et 165 bars ($165.10^5$ Pa).

17. Procédé selon l'une des revendications 1 à 16 caractérisé par le fait que la durée de l'autoclavage varie entre 30 minutes et 6 heures.

18. Procédé selon l'une des revendications 1 à 17 caractérisé par le fait que la température de calcination est comprise entre 300 et 1000 °C.

19. Procédé selon la revendication 18 caractérisé par le fait que ladite température est comprise entre 350 et 800 °C.

20. Procédé selon l'une des revendications 18 et 19 caractérisé par le fait que la durée de calcination varie entre 2 et 6 heures.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 208 580 (RHONE-POULENC)<br>* Revendications 4-16,22-29; page 6, lignes 10-24 * | 1-20 | C 01 F 17/00<br>B 01 J 23/10 |
| Y | EP-A-0 238 367 (RHONE-POULENC)<br>* Revendications 6,10 * | 1-20 | |
| D,A | EP-A-0 153 228 (RHONE-POULENC)<br>* Revendications 1,2 * | 1 | |
| A | EP-A-0 209 448 (RHONE-POULENC)<br>* Revendications 1,10 * | 1,7-10 | |
| A | PATENT ABSTRACTS OF JAPAN, vol. 9, no. 74 (C-273)[1797], 3 avril 1985; & JP-A-59 207 839 (ASAHI KASEI KOGYO K.K.) 26-11-1984<br>* En entier * | 1,7-10 | |

DOMAINES TECHNIQUES
RECHERCHES (Int. Cl.5)

C 01 F 17/00
B 01 J 23/00

Le présent rapport a été établi pour toutes les revendications

| Lieu de la recherche | Date d'achèvement de la recherche | Examinateur |
|---|---|---|
| LA HAYE | 10-04-1990 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)